# EUROPÄISCHE PATENTSCHRIFT

(11) **EP 3 615 194 B1**
(45) Veröffentlichungstag und Bekanntmachung des Hinweises auf die Patenterteilung: **09.06.2021**
(21) Anmeldenummer: 18719810.6
(22) Anmeldetag: 18.04.2018
(51) Int. Cl.: B01J 2/16, C05C 9/02

(54) **VERFAHREN UND VORRICHTUNG ZUR HERSTELLUNG VON HARNSTOFF**
METHOD AND DEVICE FOR PRODUCING UREA
PROCÉDÉ ET DISPOSITIF DE FABRICATION D'URÉE

(30) Priorität: 25.04.2017 DE 102017108842
(43) Veröffentlichungstag der Anmeldung: 04.03.2020
(73) Patentinhaber: thyssenkrupp Industrial Solutions AG, 45143 Essen (DE); thyssenkrupp AG, 45143 Essen (DE)
(72) Erfinder: LEOPOLD, Eugen, 44289 Dortmund (DE)
(74) Vertreter: thyssenkrupp Intellectual Property GmbH
(86) Internationale Anmeldenummer: PCT/EP2018/059831
(87) Internationale Veröffentlichungsnummer: WO 2018/197283

(56) Entgegenhaltungen:
- US-A- 5 653 781
- US-A- 5 965 071
- US-A1- 2007 059 446

## Beschreibung

Die Erfindung betrifft ein Verfahren zur Herstellung von harnstoffhaltigen Partikeln sowie eine geeignete Vorrichtung zur Durchführung des Verfahrens.

Aufgrund seines hohen Stickstoffgehaltes von 46,62 % ist Harnstoff weltweit das bedeutendste Stickstoffdüngemittel, ein anderer wichtiger Anwendungsbereich ist die Verwendung als Futtermittelzusatzstoff. Harnstoff wird in großen Mengen industriell hergestellt (2012: rund 184 Mio. t weltweit). Allen Verfahren gemeinsam ist, dass das in einem Reaktor aus Ammoniak und Kohlendioxid bei hohem Druck exotherm gebildete Ammoniumcarbamat in anschließenden Zersetzerstufen in Harnstoff umgewandelt wird und Überschussgase wieder in den Reaktor zurückgeführt werden. Harnstoff fällt bei seiner Herstellung aus Ammoniak und Kohlendioxid als wässrige Lösung an, die dann eingedampft wird, um in weiteren Schritten wie Kristallisieren, Schmelzen oder Sprühen zu Granulaten verarbeitet zu werden. Wichtige Granulierungsmethoden für Harnstoff bestehen in dem Versprühen oder Verspritzen mittel- bis hochkonzentrierter Lösungen oder sogar Schmelzen mit anschließender Verfestigung der Produkte. Der feste Harnstoff wird zumeist in Prilling-Granulierungsverfahren hergestellt, in denen beispielsweise als Granulierungseinrichtungen Fließbettgranulatoren, Trommelgranulatoren oder Pfannengranulatoren verwendet werden. Um eine Verklumpung oder Staubbildung während der Herstellung oder beim Handling zu vermeiden, werden während des Verfahrens Granulierungszusatzstoffe zugegeben. Übliche weitverbreitete Granulierungszusatzstoffe sind Formaldehyd oder formaldehydhaltige-Mittel, die die Staubbildung während der Herstellung und beim Verwenden der Harnstoffprodukte vermindern, die Harnstoffgranulate stabilisieren sowie eine Verbesserung der Lagereigenschaften bewirken. Die Menge an Formaldehyd im Granulat beträgt dabei üblicherweise 0,4 bis 0,5 Gew.-% bezogen auf die Harnstoffmenge.

Aus dem Stand der Technik sind für die Herstellung von partikelförmigen, harnstoffhaltigen Zusammensetzungen verschiedene Verfahren bekannt. Beispielsweise werden Harnstoffpartikel mittels Sprühkondensation hergestellt, wobei eine im Wesentlichen wasserfreie Harnstoffschmelze (Wassergehalt von 0,1 bis 0,3 Gew.-%) vom oberen Teil eines Sprühkondensationsturmes in einen aufsteigenden Strom von Luft bei Umgebungstemperatur gesprüht wird und die Tropfen verfestigt werden bzw. erstarren (Prills). Die so erhaltenen Prills weisen relativ kleine Durchmesser sowie eine geringe mechanische Festigkeit auf.

Harnstoffpartikel mit größeren Teilchendurchmessern und besseren mechanischen Eigenschaften werden zumeist durch Granulieren einer im wesentlichen wasserfreien Harnstoffschmelze oder einer wässrigen Harnstofflösung in einem Fließbett hergestellt, wie beispielsweise in der US 4,219,589 beschrieben. Dabei wird eine wässrige Harnstofflösung mit einer Harnstoffkonzentration von 70-99,9 Gew.-% in Form von sehr fein verteilten Tröpfchen mit einem durchschnittlichen Durchmesser von 20 bis 120 µm in ein Fließbett von Harnstoffpartikeln versprüht. Die Temperatur ist dabei so gewählt, dass das Wasser der auf die Harnstoffpartikel aufgesprühten Lösung verdampft und Harnstoff auf den Partikeln abgeschieden wird, so dass ein Granulat mit einer gewünschten Partikelgröße von 2,5 mm und mehr erhalten wird. Da in diesem Verfahren relativ große Mengen an feinem Staub anfallen, insbesondere wenn die eingesetzte Harnstofflösung einen Wassergehalt von mehr als 5 Gew.-% aufweist, werden häufig Granulierungszusatzstoffe eingesetzt, die diese Staubbildung reduzieren. Die Zugabe dieser Additive führt dazu, dass die Granulatpartikel und insbesondere deren Oberfläche plastisch bleiben, so dass infolge ihrer Rollbewegungen und Zusammenstöße runde Partikel mit einer glatten Oberfläche und einer guten mechanischen Stabilität erhalten werden. Das so erhaltene Granulat weist daher eine hohe Druck- und Stoßfestigkeit auf, eine geringe Tendenz zur Staubbildung durch Abrieb sowie darüber hinaus selbst bei längerer Lagerung nur eine geringe Neigung zur Verklumpung. Entsprechende Granulierungsadditive finden aber nicht nur in der Fließbettgranulierung ihre Anwendung, sondern auch in anderen Verfahren, wie beispielsweise der Sprühkristallisation oder der Trommelgranulierung.

In der WO94/03267 wird ein Verfahren zur Herstellung von Harnstoffpartikeln beschrieben, bei dem eine Schmelze oder eine Harnstofflösung, die unter anderem Formaldehyd, Methylolharnstoff, Formurea oder Hexamethylentetramin als einen Granulierungszusatzstoff enthält, in Form von sehr feinen Tröpfchen in ein Fließbett oder auf Harnstoffpartikeln versprüht wird, wobei der Granulierungszusatzstoff vor dem Granulierungsvorgang zugesetzt wird und zwar so, dass die Mischung aus besagtem Granulierungszusatzstoff und der Schmelze oder der Lösung des Harnstoffes eine Kontaktzeit oder Verweilzeit von mindestens 20 Sekunden aber von nicht mehr als 20 Minuten hat. Die Harnstofflösung wird mit dem Granulierungszusatzstoff gemischt in einer Menge von 0,3 bis 0,8 Gew.-%, berechnet als Formaldehyd und auf das Gewicht der fertigen Granulate bezogen Ein weiteres Konzept zur Herstellung von harnstoffhaltigen Partikeln ist in der US 5.965.071 A offenbart.

Ein Nachteil des hier beschriebenen Verfahrens ist, dass eine flexible, individuelle Auswahl oder Anpassung der Verweilzeit an die jeweiligen Verfahrensbedingungen wie z.B. Vollauslastung oder nur Teilauslastung der Anlage oder die Zusammensetzung der Harnstoff/Formaldehyd Lösung nicht möglich ist. Es ist nicht möglich, Einfluss auf den Verlauf der Reaktionen zwischen den formaldehydhaltigen Granulierungszusatzstoffen und dem Harnstoff zu nehmen und damit auf den Anteil an freiem Formaldehyd in der Formaldehyd/Harnstoff-Lösung.

Die jeweils optimale Verweilzeit hängt von verschiedenen Faktoren ab, etwa von dem Wassergehalt der Schmelze oder der Lösung des Harnstoffs, der Temperatur, der Menge des Granulierungszusatzstoffes und der chemischen Zusammensetzung dieses Zusatzes. So führt eine kürzere Verweilzeit dazu, dass keine hinreichende Reduzierung oder Vermeidung der Staubbildung und insbesondere des Flugstaubes erreicht werden kann während längere Verweilzeiten zu einer deutlichen Erhöhung der Biuretbildung führen.

Bei den bekannten Verfahren kann die Verweilzeit nicht oder nur sehr schlecht gesteuert werden, weil beispielsweise das Volumen der Leitungen festgelegt ist, d.h. mit steigender Leistung einer Anlage wird die Verweilzeit kürzer, während sie bei Teillast deutlich länger wird. Die Granulierungszusatzstoffe werden in einem bestimmten Abstand von der Granulierungseinrichtung in die Harnstofflösung oder Harnstoffschmelze gegeben, in Abhängigkeit vom Volumen der Leitung ergibt sich die Verweilzeit. Die im Stand der Technik beschriebenen Verfahren verfügen nicht über die Möglichkeit, die Verweilzeit an die jeweiligen Verfahrensbedingungen, wie z.B. Vollauslastung oder nur Teilauslastung der Anlage, flexibel und individuell anzupassen.

Als Granulierungszusatzstoffe werden üblicherweise Formaldehyd, formaldehydhaltige bzw. wasserlösliche Additions- und/oder Kondensationsprodukte aus Formaldehyd und Harnstoff eingesetzt, die aber in relativ großen Mengen zugegeben werden müssen und aufgrund ihrer toxischen Eigenschaften in ihrer Handhabung nicht unproblematisch sind. Austritte von Formaldehyd stellen ein akutes Gesundheits- und Umweltrisiko dar, obwohl die Einführung von Harnstoff-Formaldehyd Präpolymeren wie UF80 oder UF85 derartige Risiken verringert hat. Bei UF80 und UF85 handelt es sich um ein Intermediat auf Basis von Formaldehyd-Harnstoff-Lösung mit sehr guten Lagerungseigenschaften, hohem Feststoffanteil usw. UF80 weist 56 Gew.-% Formaldehyd und 24 Gew.-% Harnstoff, maximal 0,21 Gew.-% Methanol, maximal 0,01 Gew.-% Ameisensäure und den Rest als Wasser auf. UF85 weist 60 Gew.-% Formaldehyd und 25 Gew.-% Harnstoff, maximal 0,21 Gew.-% Methanol, maximal 0,01 Gew.-% Ameisensäure und den Rest als Wasser auf. Dabei bedeutet UF Urea/Formaldehyde, d.h. sowohl Formaldehyd/Harnstoff als auch Harnstoff/Formaldehyd. Auch bei der Verwendung derartiger Präpolymere stellt sich die Frage von Gesundheitsrisiken im Zusammenhang mit der chronischen Exposition gegenüber Formaldehyddämpfen, die auch dann nicht gänzlich vermieden werden kann.

Zur Vermeidung bzw. Reduzierung der vorstehend genannten Nachteile wurden in der Vergangenheit unterschiedliche Alternativen zu Formaldehyd und dessen wasserlöslichen Additions- und/oder Kondensationsprodukten als Granulierungszusatzstoff untersucht, die aber jeweils auch mit Einschränkungen und Nachteilen behaftet sind.

Beispielhaft sei auf die Verwendung von Alkalimetalllignosulfonaten verwiesen, wie in der US 5,766,302 beschrieben, oder auf die Verwendung von Glyoxal oder Kohlenhydraten. Diese führen aber in dem erhaltenen Harnstoffprodukt in Abhängigkeit von dem Herstellungsverfahren zu einer gelblichen oder bräunlichen Färbung, die in vielen Fällen, beispielsweise bei der Herstellung von Melamin, nicht erwünscht ist. Auf der anderen Seite führt die Verwendung von oberflächenaktiven Substanzen wie beispielsweise Mischungen aus Polyvinylacetat und Polyvinylalkohol als Granulierungszusatzstoffe ebenfalls zu Problemen, da diese zum Schäumen neigen, beispielsweise wenn das Additiv mit der Schmelze gemischt wird oder in den Wäschern, wo der behandelte Harnstoffstaub aufgelöst wird und der Wirkungsgrad der Wäscher beeinträchtigt wird. Die Neigung dieser Substanzen zur Schaumbildung hat zudem auch Auswirkungen auf das Endprodukt, das eine geringere Dichte aufweist und vom Markt nicht akzeptiert wird. Insgesamt ist daher eine Neigung zur Schaumbildung bei industrieller Anwendung der Harnstoffgranulate nicht akzeptabel.

Die WO 2015/193377 A1 versucht diese im Stand der Technik beschriebenen Nachteile weiter zu optimieren und/oder zu reduzieren. Sie beschreibt eine partikelförmige, harnstoffhaltige Zusammensetzung, ein Verfahren zu ihrer Herstellung sowie die Verwendung eines Additivs zur Herstellung einer partikelförmigen, harnstoffhaltigen Zusammensetzung. Zur Herstellung einer partikelförmigen, harnstoffhaltigen Zusammensetzung werden Additive verwendet umfassend eine oder beide der Komponenten (ii) und (iii): wobei (ii) eine Kombination aus wenigstens einem AminoGruppen enthaltenden Polymeren oder Oligomeren und wenigstens einer funktionalisiertem Polyvinylverbindung ist; (iii) wenigstens einen aliphatischen C2-C8 Dialdehyd umfasst. Beispielhaft genannt werden als Komponente (ii) eine Kombination aus Polyethylenimin und Polyvinylamin und als Bestandteil der Komponente (iii) Ethandial und Glutaraldehyd. Mittels dieser Additive soll eine Alternative bereitgestellt werden, die die Verwendung von Formaldehyd vermeidet und mittels derer gleichzeitig partikelförmige Zusammensetzungen erzeugt werden können, deren Teilchen im Hinblick auf die mechanischen Eigenschaften vergleichbare Eigenschaften wie die mit Formaldehyd hergestellten aufweisen. Der Einsatz derartiger Granulierungszusatzstoffe erfordert komplexere Anlagen zur Herstellung von partikulären Harnstoffhaltigen Zusammensetzungen, da entsprechende Vorrichtungen zur Bereitstellung, Mischung und/oder Zugabe der Granulierungszusatzstoffe implementiert werden müssen, die einerseits deutlich aufwendiger sind und damit kostenintensiver sind sowie zum anderen mehr Platz benötigen, was eine Implementierung in bestehende Herstellungsanlagen für und Granulierungseinrichtungen von Harnstoff erschwert.

Düngemittel, die aus Harnstoffherstellungsverfahren resultieren weisen eine erhöhte Konzentration an Biuret auf. In hohen Konzentrationen stört Biuret den internen N-Stoffwechsel in Pflanzen und verhindert Proteinbildung in Pflanzen. Biuret wird von vielen Mikroorganismen im Boden abgebaut, aber nur relativ langsam. Modernere HarnstoffHerstellungsverfahren weisen typischerweise Biuret-Konzentrationen von weniger als 1,0 bis 1,3 % auf, was für die meisten Anwendungen kaum Probleme darstellt, es gibt aber einige Pflanzenarten, die besonders empfindlich gegenüber Biuret sind, d.h. es sollte ein Harnstoff mit sehr geringen Biuretkonzentrationen verwendet werden. Während Blatt- Anwendung von Harnstofflösungen, die 1% Biuret enthalten, für viele gängige landwirtschaftlichen Nutzpflanzen akzeptabel ist, ist für die Blattdüngung von einigen empfindlichen Kulturen, Harnstoff mit besonders niedrigen Konzentrationen von Biuret (weniger als 0,3% Biuret, vorzugsweise weniger als 0,2% Biuret) erforderlich.

Bei dem Bau von Anlagen zur Harnstoffherstellung und zur Harnstoff-Granulierung sind u.a. die einschlägigen Umweltgesetze, beispielsweise bzgl. der Emission von VOCs (volatile organic compounds), zu denen auch Formaldehyd gehört, zu beachten. Die Verwendung von Formaldehyd in Form von Formaldehyd/Harnstoff-Präkondensat/- Polymerisat (z.B. UF80 oder UF85) als Granulierungszusatzstoff hat in der Vergangenheit bereits zu deutlichen Verringerungen der Emission an freiem Formaldehyd in der Atmosphäre geführt. Da auch in diesen Präkondensaten noch freies Formaldehyd enthalten ist, besteht die Gefahr, dass auch freies Formaldehyd im Abgas der Anlage vorhanden ist. Es ist zu erwarten, dass weltweit zukünftig die Grenzwerte für Formaldehyd weiter gesenkt werden, um Mensch und Umwelt ausreichend zu schützen. D.h. es werden weitere Investitionen in eine Technik erforderlich, die einerseits diese neuen Grenzwerte erfüllt und andererseits auch wirtschaftlich interessant bleibt.

Aus der US 5,965,071 A ist ein Verfahren zur Herstellung eines Harnstoffgranulats bekannt, bei dem aus einer Zuführleitung für Harnstofflösung zum Granulator ein Seitenstrom an Harnstofflösung abgeführt wird, welcher dann mit einem Strom einer wässrigen Formaldehydlösung in einer Mischvorrichtung gemischt wird. Der Mischvorrichtung werden der Seitenstrom der Harnstofflösung und die Formaldehydlösung jeweils separat zugeführt, so dass diese erst in der Mischvorrichtung zusammenkommen. In der Mischvorrichtung ist eine Kühlung vorgesehen. Außerdem wird weiterhin eine Ammoniaklösung der Mischvorrichtung zugeführt. Stromabwärts der Mischvorrichtung ist ein Verdampfer vorgesehen, um die Lösung zu konzentrieren und danach wird die konzentrierte Lösung, bei der es sich um ein Harnstoff-Formaldehyd-Präkondensat handelt, wieder dem Hauptstrom der Harnstofflösung zugeführt, bevor das Gemisch in den Granulator gelangt.

Es ist daher eine Aufgabe der vorliegenden Erfindung, ein Verfahren und eine Vorrichtung zur Herstellung von harnstoffhaltigen Partikeln zur Verfügung zu stellen, welche die Nachteile des Standes der Technik nicht oder zumindest in verringerter Form aufweisen.

Diese Aufgabe wird durch die Merkmale der Patentansprüche 1 bzw. 11 gelöst.

Es wurde gefunden, dass unter Verwendung des erfindungsgemäßen Verfahrens harnstoffhaltige Partikel mit zufriedenstellenden Eigenschaften ohne die bisherigen Nachteile erhalten werden können. So werden
- die mit dem Einsatz von formaldehydhaltigen Granulierungszusatzstoffen, wie Formaldehyd und Harnstoff-Formaldehyd Kondensaten, gemäß den Verfahren nach dem Stand der Technik verbundenen Gesundheits- und Umweltrisiken reduziert oder sogar vollständig vermieden; und/oder
- eine kostengünstigere Alternative zur Herstellung harnstoffhaltiger Partikel gemäß der Verfahren im Stand der Technik unter Verwendung von Formaldehyd und Harnstoff-Formaldehyd Kondensaten oder alternativer Granulierungszusatzstoffen bereitgestellt; und/oder
- die unerwünschte Färbung der Zusammensetzung reduziert oder sogar vollständig vermieden; und/oder
- das unerwünschte Schäumen während der Herstellung oder der Nasswäsche reduziert oder sogar vollständig vermieden; und/oder
- die Bildung von Staub während der Herstellung der Zusammensetzung reduziert oder sogar vollständig vermieden, und/oder
- der Gehalt an Biuret während des Herstellungsverfahrens und im Endprodukt reduziert oder sogar vollständig vermieden; und/oder
- die Emission von Formaldehyd reduziert oder sogar vollständig vermieden; und/oder
- ist das erfindungsgemäße Verfahren problemlos in bestehende Anlagen zur Harnstoffherstellung und Granulierung integrierbar; und/oder
- die Verweilzeit der harnstoffhaltigen Lösung wird flexibel gesteuert und an die individuellen Bedingungen in der Anlage angepasst.

Ein Aspekt der Erfindung betrifft ein Verfahren zur Herstellung von harnstoffhaltigen Partikeln, umfassend die Schritte:
(a) Bereitstellung einer harnstoffhaltigen Lösung in einem ersten Strom
(b) Bereitstellen einer einen formaldehydhaltigen Granulierungszusatzstoff enthaltenden Lösung
(c) Abzweigung eines Teils der harnstoffhaltigen Lösung aus dem ersten Strom in einen Seitenstrom
(d) Zusammenführen des Teils der harnstoffhaltigen Lösung aus dem Seitenstrom und der einen formaldehydhaltigen Granulierungszusatzstoff enthaltenden Lösung in einen zweiten Strom
(e) Zuführen des zweiten Stroms zum ersten Strom
(f) Zuführung des ersten Stroms, enthaltend auch die Lösung aus dem zweiten Strom, in eine Granulierungseinrichtung oder Prillingeinrichtung, wobei die Menge des Teils der harnstoffhaltigen Lösung, die aus dem ersten Strom stammt und mit einer einen formaldehydhaltigen Granulierungszusatzstoff enthaltenden Lösung in einem zweiten Strom zusammengeführt wird, über eine Steuerungsvorrichtung zum Dosieren gesteuert wird, wobei diese Menge über mindestens ein Ventil gesteuert wird.

Bei dem erfindungsgemäßen Verfahren werden der Biuret- und der Formaldehydgehalt der harnstoffhaltigen Partikel minimiert. Der formaldehydhaltige Granulierungszusatzstoff kann beispielsweise ein Formaldehyd/Harnstoff-Präkondensat oder -Polymerisat sein.

Dabei kann die harnstoffhaltige Lösung sowohl als wässrige Lösung als auch als Schmelze vorliegen.

Üblicherweise wird die harnstoffhaltige Lösung bevor sie der Granulierungseinrichtung zugeführt wird eingedampft, d.h. aufkonzentriert.

In einer bevorzugten Ausführungsform des erfindungsgemäßen Verfahrens beträgt der Harnstoff-Gehalt der in Schritt (a) bereitgestellten Lösung mehr als 60 Gew.-%. In einer anderen bevorzugten Ausführungsform beträgt der Harnstoff-Gehalt mehr als 95 Gew.-%, vorzugsweise mehr als 97 Gew.-%, besonders bevorzugt mehr als 98 Gew.-%, weiter bevorzugt mehr als 98,5 Gew.-%.

Die Temperatur der harnstoffhaltigen Lösung beträgt vorzugsweise mehr als 130°C.

Geeignete Granulierungseinrichtungen sind beispielsweise Fließbettgranulatoren oder Trommelgranulatoren. Das Granulieren der harnstoffhaltigen Lösung unter Zugabe eines formaldehydhaltigen Granulierungszusatzstoffes kann nach üblichen, dem Fachmann bekannten Methoden erfolgen, beispielsweise mittels Sprühkondensation (Prilling), Trommelgranulierung oder Fließbettgranulierung.

In dem erfindungsgemäßen Verfahren wird die einen formaldehydhaltigen Granulierungszusatzstoff enthaltenden Lösung nicht direkt in die harnstoffhaltige Lösung während ihres Transportes von der Harnstoffanlage zur Granulierungseinrichtung (erster Strom) gegeben, sondern ein Teil der harnstoffhaltigen Lösung wird aus dem ersten Strom abgetrennt in einen Seitenstrom und mit der einen formaldehydhaltigen Granulierungszusatzstoff enthaltenden Lösung in einem zweiten Strom zusammengeführt.

Die Menge der abgetrennten harnstoffhaltigen Lösung kann vorzugsweise über ein geeignetes Ventil gesteuert werden. In einer bevorzugten Ausführungsform ist dieses Ventil stufenlos regelbar, wobei es vorzugsweise in einem möglichst großen Bereich stufenlos regelbar ist.

Eine einen formaldehydhaltigen Granulierungszusatzstoff enthaltende Lösung sind z.B. Formaldehyd/Harnstoff-haltige Lösungen. Beispielsweise kann Formaldehyd bzw. wasserlösliche Additions- und/oder Kondensationsprodukte aus Formaldehyd und Harnstoff eingesetzt werden. In einer bevorzugten Ausführungsform werden Formaldehyd/Harnstoff-Präkondensate bzw. -Polymerisate eingesetzt. Geeignete Beispiele für solche Formaldehyd/ Harnstoff-Präkondensate sind die kommerziell erhältlichen UF80 oder UF85. Durch den Einsatz von Formaldehyd/Harnstoff-Präkondensaten als Granulierungszusatzstoff wird vorteilhafterweise die Freisetzung von Formaldehyd-Dämpfen reduziert.

In einer Ausführungsform des erfindungsgemäßen Verfahrens umfasst das Verfahren einen Schritt, in dem nach dem Zusammenführen eines Teils der harnstoffhaltigen Lösung aus dem ersten Strom und der einen formaldehydhaltigen Granulierungszusatzstoff enthaltenden Lösung in einen zweiten Strom eine Ver- bzw. Durchmischung erfolgt. Diese Vermischung kann mittels im Stand der Technik bekannter Vorrichtungen erfolgen.

In einer weiteren Ausführungsform wird die Lösung des zweiten Stroms über eine Reaktionsvorrichtung geleitet, bevor sie dem ersten Strom zugeführt wird. Bei der Reaktionsvorrichtung kann es sich beispielsweise um ein erweitertes Rohr oder einen Behälter handeln, das über ein ausreichendes Volumen verfügt, um die notwendige Reaktionszeit zu gewährleisten. In einer anderen Ausführungsform handelt es sich bei der Reaktionsvorrichtung um einen Reaktor, beispielsweise einen UF-Reaktor, d.h. einen Harnstoff-Formaldehyd-Reaktor. Bei einem herkömmlichen Anlagenaufbau nach dem Stand der Technik wird der formaldehydhaltige Granulierungszusatzstoff, insbesondere das Harnstoff/Formaldehyd-Präkondensat direkt zur Harnstoffschmelze gegeben, die beiden Ströme werden vermischt und anschließend fließt das Gemisch direkt weiter zum Granulator. Im Rahmen der vorliegenden Erfindung wurde festgestellt, dass die Wegstrecke, die das Gemisch nach der Vermischung zurücklegt, wichtig ist für die Einstellung des richtigen Formaldehyd-Gehalts in der Harnstoffschmelze. Ist die Verweilzeit in der Rohrleitung zu kurz, ist die Verteilung des Formaldehyds in der Harnstoffschmelze nicht ausreichend und die Qualität des Granulats nimmt ab. Ist die Verweilzeit in der Rohrleitung zu lang, führt dies zur Biuret-Bildung. Durch die erfindungsgemäße Reaktionsvorrichtung (den UF-Reaktor) ist es nun möglich, den Anteil von Formaldehyd zur Harnstofflösung deutlich präziser einzustellen und auch die Verweilzeit zur Einstellung der idealen Durchmischung zu kontrollieren. Dadurch, dass die Verweilzeit in der Reaktionsvorrichtung eingestellt werden kann, kann die Hauptleitung zum Granulator deutlich kürzer ausfallen und daraus resultierend wird die Biuret-Bildung im Hauptstrom deutlich reduziert.

Der zweite Strom wird anschließend dem ersten Strom wieder zugeführt. Vorzugsweise erfolgt die Zusammenführung eines Teils der nicht abgetrennten harnstoffhaltigen Lösung aus dem ersten Strom und der formaldehydhaltigen Lösung des zweiten Stroms erst kurz vor der Granulierungseinrichtung.

Die Zuführung des zweiten Stroms zum ersten Strom kann bei Bedarf durch geeignete Ventile gesteuert werden. Dabei ist bevorzugt, dass diese(s) Ventil(e) stufenlos regelbar ist/sind und zwar in einem möglichst großen Bereich. Dadurch wird eine Dosierung bei der Zuführung und ggf. auch eine Absperrung des zweiten Stroms zum/vom ersten Strom ermöglicht.

In einer Ausführungsform des erfindungsgemäßen Verfahrens beträgt der Formaldehydgehalt im ersten Strom der harnstoffhaltigen-Lösung, nach Zuführung des zweiten Stroms, vor Zuführung in eine Granulierungseinrichtung oder Prillingeinrichtung, 0,01-0,4 Gew.-% bezogen auf den Harnstoffgehalt. In einer anderen Ausführungsform beträgt der Formaldehydgehalt im ersten Strom vor Zuführung in eine Granulierungseinrichtung oder Prillingeinrichtung weniger als oder höchstens 0,3 Gew.-% bezogen auf die Harnstoffmenge. In wieder einer anderen Ausführungsform beträgt der Formaldehydgehalt im ersten Strom vor Zuführung in eine Granulierungseinrichtung oder Prillingeinrichtung weniger als oder höchstens 0,2 Gew.-%, vorzugsweise weniger als oder höchstens 0,1 Gew.-% und besonders bevorzugt weniger als oder höchstens 0,05 Gew.-% bezogen auf die Harnstoffmenge.

Durch die Möglichkeit, die Menge des Teils der harnstoffhaltigen Lösung, der aus dem ersten Strom abgezweigt wird, variabel zu steuern, beispielsweise über ein geeignetes Ventil, ist es möglich, die Menge der harnstoffhaltigen Lösung im Seitenstrom so anzupassen, dass die Verweilzeit im zweiten Strom, insbesondere in der Reaktionseinrichtung, frei ausgewählt werden kann und dadurch auch der Grad der in der Reaktionseinrichtung stattfindenden Reaktionen.

Insbesondere kann mittels des erfindungsgemäßen Verfahrens die Verweil-/Kontaktzeit der formaldehydhaltigen Lösung, vorzugsweise in Form eines Formaldehyd/Harnstoff-Präkondensat/-Polymerisats wie UF80 oder UF85, angepasst, kontrolliert und gesteuert werden, insbesondere auch in Abhängigkeit von der Zusammensetzung der Formaldehyd/Harnstoff-Lösung. So kann der Verlauf der Reaktion zwischen der Formaldehyd/Harnstoff-Lösung und der harnstoffhaltigen Lösung wie gewünscht beeinflusst werden und damit auch der Anteil an freiem Formaldehyd in der Lösung gesteuert werden. Die Verweil-/Kontaktzeit wird so ausgewählt, dass ausreichend Zeit vorhanden ist, dass die gewünschten Reaktionen stattfinden können, wie beispielsweise zwischen Formaldehyd und Methylolharnstoff zu Methylendiharnstoff.

Durch die Änderung der Menge an harnstoffhaltiger Lösung im Seitenstrom kann die Verweilzeit in der Reaktionsvorrichtung gesteuert werden. Die Veränderung der Reaktionszeiten hat Einfluss auf den Gehalt an freiem Formaldehyd, der noch in der Lösung vorhanden ist. D.h. mittels des erfindungsgemäßen Verfahrens können die Emissionswerte an VOC, insbesondere Formaldehyd, wie gewünscht gesteuert werden. Damit wird der Anteil an freiem Formaldehyd oder anderen flüchtigen Substanzen im Abgas, die in der Harnstoffhaltigen Lösung reagieren können, reduziert.

Gleichzeitig wird durch die Steuerung der Verweil-/Kontaktzeit auch die Entstehung von Biuret in der nicht abgetrennten harnstoffhaltigen Lösung im Strom deutlich verringert, vorzugsweise vermieden. Dies ist möglich, weil im erfindungsgemäßen Verfahren längere Verweilzeiten mit einem sehr kleinen Seitenstrom der harnstoffhaltigen Lösung, die mit der einen formaldehydhaltigen Granulierungszusatzstoff enthaltenden Lösung zu einem zweiten Strom zusammengeführt wird, ermöglicht werden. Die Länge des Weges (Transferleitung) der harnstoffhaltigen Lösung von der Harnstoff-Anlage bis zur Granulierungseinrichtung kann beim erfindungsgemäßen Verfahren vorteilhafter Weise ohne Berücksichtigung der Verweilzeit optimiert und kurzgehalten werden und damit die gesamte Biuretbildung minimiert werden. Da die Verweilzeit der harnstoffhaltigen Lösung in der Transferleitung keine Rolle spielt, kann das Eindampfen der harnstoffhaltigen Lösung nahe dem Granulator untergebracht werden und damit die Verweilzeit der harnstoffhaltigen Lösung bei hoher Konzentration und Temperatur weiter verkürzt werden. Mittels des erfindungsgemäßen Verfahrens wird damit auch für ein Fahren der Anlage unter Teillast eine deutlich reduzierte Biuretbildung gewährleistet.

Die Zeitpunkte und die Zugabe der Komponenten können variieren. So ist es beispielsweise möglich, dass der gesamte zweite Strom kurz vor der Granulierungseinrichtung dem ersten Strom zugeführt wird und dieser vereinigte Strom (erster Strom, enthaltend auch die Lösung aus dem zweiten Strom) an der Seite des Granulierungsbeginns in die Granulierungseinrichtung eintritt.

In einer anderen Ausführungsform findet das Granulierungsverfahren entlang eines im Wesentlichen längs gerichteten Wachstumswegs von einem Granulierungsbeginn-Ende zu einem Produktaustrittsende statt. Der erste Strom, der die harnstoffhaltige Lösung enthält, wird mittels mehrerer Harnstoff-Zuführungsleitungen, die von der Haupt-Harnstoffeinspeisung, der Transferleitung, abgehen, in die Granulierungseinrichtung eingeleitet, wobei die Harnstoff-Zuführungen entlang des längs gerichteten Wegs von einer ersten Harnstoffzuführung, die dem Granulierungsbeginn-Ende am nächsten ist, zu einer letzten Harnstoff-Zuführung, die dem Produkt-Austrittsende am nächsten ist, verteilt sind, und wobei der zweite Strom, der die formaldehydhaltigen Lösung enthält, mit dem ersten Strom gemischt wird. Die Zuführleitung, die den zweiten Strom enthält, kann in mehrere Zuführleitungen aufgeteilt werden, die direkt in die jeweiligen Harnstoff-Zuführungsleitungen, die von der Haupt-Harnstoffeinspeisung, der Transferleitung, abgehen, eingeleitet werden.

Dabei können in einer Ausführungsform die Konzentration des zweiten Stromes in den Harnstoff-Zuführungen ungleichmäßig sein, so dass mindestens zwei der Harnstoff-Zuführungen eine unterschiedliche Konzentration des zweiten Stromes aufweisen, wobei der zweite Strom auf eine Mehrzahl von formaldehydhaltigen Strömen aufgeteilt wird, und jeder formaldehydhaltige Strom direkt mit dem jeweiligen ersten Strom in einer HarnstoffZuführungsleitung gemischt wird.

In einer anderen Ausführungsform wird der gesamte zweite Strom dem ersten Strom erst an der letzten Harnstoffzuführungsleitung, die dem Produkt-Austrittsende am nächsten ist, zugeführt. Dies führt dazu, dass der Kern der harnstoffhaltigen Partikel formaldehydfrei ist und nur der äußere Teil der Partikel Formaldehyd enthält.

Ein weiterer nicht beanspruchter Aspekt betrifft harnstoffhaltige Partikel erhältlich nach einem erfindungsgemäßen Verfahren wie vorstehend beschrieben.

In einer Ausführungsform weisen die harnstoffhaltigen Partikel einen Formaldehydgehalt von 0,01 bis 0,4 Gew.-% bezogen auf den Harnstoffgehalt auf.

Die harnstoffhaltigen Partikel können neben den genannten Bestandteilen weitere Bestandteile enthalten. Die Art der Bestandteile sowie deren Menge hängen beispielsweise vom eingesetzten Harnstoff oder der Formaldehyd-Komponente ab. So kann die partikelförmige harnstoffhaltige Zusammensetzung Wasser enthalten, z.B. in einer Menge von 0,05 bis 0,5 Gew.-%, insbesondere 0,1 bis 0,3 Gew.-% und Nebenprodukte der Harnstoffsynthese wie z.B. Biuret oder NH₃. Üblicherweise beträgt der Anteil der Nebenprodukte nicht mehr als 1,5 Gew.-%, insbesondere nicht mehr als 1,25 Gew.-%.

Ein weiterer Aspekt ist die Verwendung harnstoffhaltiger Partikel wie vorstehend beschrieben als Düngemittel oder als technischer Harnstoff.

Ein weiterer Aspekt der Erfindung betrifft eine Vorrichtung zur Herstellung harnstoffhaltiger Partikel mit den Merkmalen des Anspruchs 11.

In einer bevorzugten Ausführungsform der erfindungsgemäßen Vorrichtung ist die Granulierungseinrichtung ein Fließbettgranulator, in einer anderen ein Trommelgranulator.

Erfindungsgemäss weist die von der Transferleitung (3) abzweigende Seitenstromleitung (6) eine Steuerungsvorrichtung zum Dosieren (5) auf, die ein Ventil umfasst. Es kann sich dabei um geeignete Ventile handeln, die vorzugsweise stufenlos regelbar sind.

In einer Ausführungsform weist die Transferleitung (3), nach der Abzweigung der Seitenstromleitung (6) und vor der Einmündung der Zuführleitung (8) in die Transferleitung (3') eine Steuerungsvorrichtung (5') zum Dosieren auf. Geeignete Steuerungsvorrichtungen sind dem Fachmann aus dem Stand der Technik bekannt. Es kann sich dabei um geeignete Ventile handeln, die vorzugsweise stufenlos regelbar sind.

Bei der Reaktionsvorrichtung (7) kann es sich beispielsweise um ein erweitertes Rohr oder einen Reaktionsbehälter handeln, welches(r) mit der harnstoffhaltigen Lösung durchströmt wird und es ermöglicht, ein Volumen zu schaffen und die Verweilzeit der Reaktion einzustellen.

Die erfindungsgemäße Vorrichtung eignet sich besonders zur Durchführung des erfindungsgemäßen Verfahrens. Ein weiterer Aspekt betrifft daher die Verwendung der erfindungsgemäßen Vorrichtung zur Durchführung des erfindungsgemäßen Verfahrens zur Herstellung harnstoffhaltiger Partikel.

Die erfindungsgemäßen Verfahren und die erfindungsgemäße Vorrichtung können beispielsweise mit einer Anlage zur Herstellung von Harnstoff kombiniert werden.
Figur 1 zeigt ein Schema einer Vorrichtung zur Durchführung eines Verfahrens umfassend die Zugabe eines Granulierungszusatzstoffes zu der Harnstofflösung (gemäß dem Stand der Technik).
Figur 2 zeigt ein Schema einer erfindungsgemäßen Vorrichtung zur Durchführung eines erfindungsgemäßen Verfahrens umfassend die Zugabe eines Granulierungszusatzstoffes zu der Harnstofflösung.
Figur 3 ein Schema einer erfindungsgemäßen Vorrichtung zur Durchführung eines erfindungsgemäßen Verfahrens umfassend die Zugabe eines Granulierungszusatzstoffes zu der Harnstofflösung mit verteilten Zuleitungen des Granulierungszusatzstoffes.

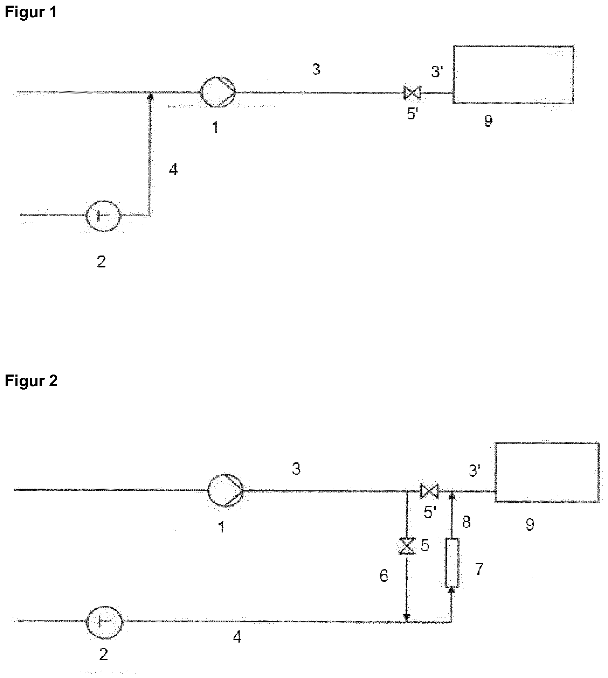

Die in Fig. 1 dargestellte Vorrichtung, wie sie auch im Stand der Technik verwendet wird, umfasst eine Transferleitung (3) in der eine harnstoffhaltige Lösung strömt, der über eine Pumpe (2) und eine Transportleitung (4) eine einen formaldehydhaltigen Granulierungszusatzstoff enthaltende Lösung zugeführt wird. Diese Lösung wird dann der Granulierungseinrichtung (9) zugeführt. Dies kann längs der Transferleitung (3, 3') mittels einer Pumpe (1) und/oder geeigneten Ventils (5') erfolgen. Die Zugabe des formaldehydhaltigen Granulierungszusatzstoffes muss in ausreichendem Abstand zur Granulierungseinrichtung erfolgen, damit eine ausreichende Verweilzeit gewährleistet werden kann, in der die gewünschten Reaktionen zwischen Formaldehyd und Harnstoff ablaufen können. D.h. die Transferleitung muss entsprechend lang sein, was aber gleichzeitig zur Erhöhung der Biuretbildung führt.

Fig. 2 zeigt eine Ausführungsform einer erfindungsgemäßen Vorrichtung bei der von der Transferleitung (3), in der sich der erste Strom der harnstoffhaltigen Lösung befindet, eine Seitenstromleitung (6) abzweigt, die die vom ersten Strom abgezweigte harnstoffhaltige Lösung enthält. Mit Hilfe einer Steuerungsvorrichtung zum Dosieren (5) - beispielsweise einem stufenlos arbeitenden Ventil, kann die abgezweigte Menge der harnstoffhaltigen Lösung im Seitenstrom in der erwünschten Menge dosiert werden. Über eine Pumpe (2) und eine Transportleitung (4) wird eine formaldehydhaltige Granulierungszusatzstofflösung bereitgestellt und mit dem aus dem ersten Strom stammenden, im Seitenstrom abgezweigten, Teil der harnstoffhaltigen Lösung in einem zweiten Strom zusammengeführt. Die Transportleitung (4) ist mit einer Reaktionsvorrichtung (7) verbunden, wobei die Seitenstromleitung (6) vor der Reaktionsvorrichtung (7) in die Transportleitung (4) mündet. Auf diese Weise erfolgt das Zusammenführen eines Teils der harnstoffhaltigen Lösung aus dem ersten Strom und der Formaldehyd/Harnstoff-haltigen Lösung in einen zweiten Strom. Diese zusammengeführte Lösung (im zweiten Strom) wird über die Transportleitung in die Reaktionsvorrichtung (7) geleitet. Hier finden im Wesentlichen die gewünschten Reaktionen zwischen z. B. Formaldehyd und Methylolharnstoff zu Methylendiharnstoff statt. Durch die Steuerung des Anteils der abgezweigten harnstoffhaltigen Lösung im Seitenstrom der Seitenleitung (6) kann u.a. die Verweilzeit in der Reaktionsvorrichtung (7) gesteuert werden und damit auch der Grad der dort stattfindenden Reaktionen. Durch die Veränderung der Verweilzeit und damit der Reaktionszeit wird der Gehalt an Formaldehyd in der Lösung nach Verlassen des Reaktors (7) beeinflusst und gesteuert und damit auch die Emissionswerte. Dies betrifft insbesondere die VOC in der Abluft der Granulierungsvorrichtung (9). Eine längere Verweilzeit wird mittels eines sehr kleinen Seitenstroms harnstoffhaltiger Lösung realisiert. Dadurch wird die Biuretbildung im ersten Strom gegenüber den Verfahren nach dem Stand der Technik in der Transferleitung (3, 3') sehr gering gehalten oder sogar ganz vermieden. Vorteilhafterweise kann die Länge der Transferleitung (3, 3') ohne Berücksichtigung einer erforderlichen Verweilzeit optimiert werden und sehr kurz gehalten werden. Nach Verlassen der Reaktionsvorrichtung (7) wird der zweite Strom durch eine Zuführleitung (8) der Transferleitung (3') zugeführt, vorzugsweise erst kurz vor der Granulierungseinrichtung (9). Vor der Einmündung der Zuführleitung (8) in die Transferleitung (3') befindet sich eine Steuerungsvorrichtung (5') zum Dosieren der relativen Verhältnisse des ersten und zweiten Stromes zueinander.

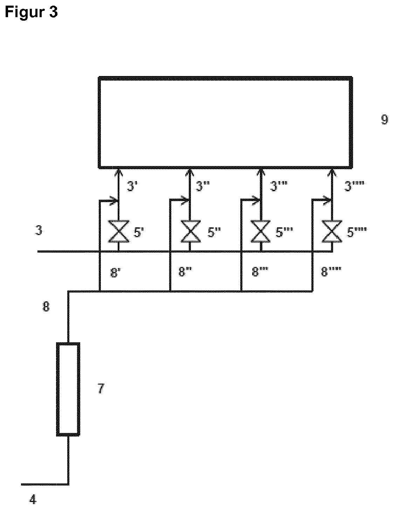

Fig. 3 zeigt eine Ausführungsform einer erfindungsgemäßen Vorrichtung bei der die Zuführleitung 8 des zweiten Stroms in mehrere Zuführleitungen 8', 8", 8"', 8"" aufgeteilt wird, wobei jede Zuführleitung 8', 8", 8"', 8"" in eine entsprechende Transferleitung 3', 3", 3", 3"", die als ersten Strom eine harnstoffhaltige Lösung enthält, mündet. In dieser Ausführungsform wird der zweite Strom dem ersten Strom in einer Transferleitung nicht direkt und vollständig auf einmal zugeführt. So kann das Verhältnis der Konzentrationen des ersten und zweiten Stroms zueinander gesteuert werden. Zu diesem Zweck kann die Menge des zweiten Stromes und damit der Formaldehyd-Anteil durch Einsatz geeigneter Ventile, hier nicht gezeigt, gesteuert werden. So kann eine nicht-einheitliche Verteilung des Formaldehyds als Granulierungszusatzstoff in den harnstoffhaltigen Partikeln erreicht werden.

Im Folgenden wird die Erfindung anhand von Beispielen erläutert. Diese Erläuterungen sind lediglich beispielhaft und schränken den allgemeinen Erfindungsgedanken nicht ein.

### Beispiele:

### Vergleichsbeispiel:

In einer Vorrichtung gemäß Fig. 1 werden 138 m³/h einer harnstoffhaltigen Lösung mit 1 m³/h einer Harnstoff-Formaldehyd-Lösung vermischt und über die Transferleitung zur Granulierungseinrichtung, z.B. einem Granulator geleitet. Die Transferleitung ist so ausgelegt, dass die Verweilzeit bei voller Leistung der Vorrichtung ca. 30 Sekunden beträgt.

### Beispiel 1:

In einer Vorrichtung gemäß Fig. 2 bei dem ein Reaktionsbehälter mit einem Volumen von 0,1 m³ verwendet wird, werden von 138 m³/h einer harnstoffhaltigen Lösung unterschiedliche Seitenströme einer harnstoffhaltigen Lösung abgezweigt:
a) Ein Seitenstrom von 1 m³/h einer harnstoffhaltigen Lösung wird mit 1 m³/h UF-Lösung vermischt und 2 m³/h der Lösung werden in den Reaktionsbehälter geleitet. Daraus ergibt sich eine Verweilzeit von 3 Minuten in dem Reaktionsbehälter.
b) Ein Seitenstrom von 17 m³/h einer harnstoffhaltigen Lösung wird mit 1 m³/h UF-Lösung vermischt und 18 m³/h der Lösung werden in den Reaktionsbehälter geleitet. Daraus ergibt sich eine Verweilzeit von 20 Sekunden in dem Reaktionsbehälter.

Diese hohe Variabilität in der Verweilzeit erlaubt es flexibel auf die unterschiedlichen Zusammensetzungen der UF-Mischung zu reagieren und damit die Formaldehyd-Emissionen zu kontrollieren.

Die Bildung von Biuret verringert sich, weil die, wie im Beispiel 1a) und 1b) beschriebenen, abgezweigten harnstoffhaltigen Lösungen einschließlich der UF-Lösung, 2 m³/h bzw. 18 m³/h, eine ausgewählte Verweilzeit haben und deshalb die verbleibenden 137 m³/h bzw. 121 m³/h über eine sehr kurze Transferleitung dem Granulator zugeführt werden können.

### Bezugszeichenliste:

- 1: Pumpe
- 2: Pumpe
- 3,3': Transferleitung
- 4: Transportleitung
- 5, 5', 5", 5"', 5"": Steuerungsvorrichtung zum Dosieren
- 6: Seitenstromleitung
- 7: Reaktionsvorrichtung
- 8, 8', 8", 8"', 8"": Zuführleitung
- 9: Granulierungseinrichtung

## Patentansprüche

1. Verfahren zur Herstellung von harnstoffhaltigen Partikeln, umfassend die Schritte:
(a) Bereitstellung einer harnstoffhaltigen Lösung in einem ersten Strom
(b) Bereitstellen einer einen formaldehydhaltigen Granulierungszusatzstoff enthaltenden Lösung
(c) Abzweigung eines Teils der harnstoffhaltigen Lösung aus dem ersten Strom in einen Seitenstrom
(d) Zusammenführen des Teils der harnstoffhaltigen Lösung aus dem Seitenstrom und der einen formaldehydhaltigen Granulierungszusatzstoff enthaltenden Lösung in einen zweiten Strom
(e) Zuführen des zweiten Stroms zum ersten Strom
(f) Zuführung des ersten Stroms, enthaltend auch die Lösung aus dem zweiten Strom, in eine Granulierungseinrichtung oder Prillingeinrichtung,
**dadurch gekennzeichnet, dass** die Menge des Teils der harnstoffhaltigen Lösung, die aus dem ersten Strom stammt und mit einer einen formaldehydhaltigen Granulierungszusatzstoff enthaltenden Lösung in einem zweiten Strom zusammengeführt wird, über eine Steuerungsvorrichtung zum Dosieren (5) gesteuert wird, wobei diese Menge über mindestens ein Ventil gesteuert wird.

2. Verfahren nach Anspruch 1, **dadurch gekennzeichnet, dass** die Granulierungseinrichtung ausgewählt ist aus einem Fließbettgranulator oder Trommelgranulator.

3. Verfahren gemäß einem der vorstehenden Ansprüche, **dadurch gekennzeichnet, dass** nach Zusammenführen eines Teils der harnstoffhaltigen Lösung aus dem ersten Strom und der einen formaldehydhaltigen Granulierungszusatzstoff enthaltenden Lösung in einen zweiten Strom eine Ver-/Durchmischung erfolgt.

4. Verfahren nach einem der vorstehenden Ansprüche, **dadurch gekennzeichnet, dass** der zweite Strom über eine Reaktionsvorrichtung (7) geleitet wird, bevor er dem ersten Strom zugeführt wird.

5. Verfahren nach Anspruch 4, **dadurch gekennzeichnet, dass** die Reaktionsvorrichtung (7) ein Reaktionsbehälter oder ein erweitertes Rohr ist.

6. Verfahren gemäß einem der vorstehenden Ansprüche, **dadurch gekennzeichnet, dass** der Formaldehydgehalt im ersten Strom der harnstoffhaltigen Lösung, nach Zuführung des zweiten Stroms, vor Zuführung in eine Granulierungseinrichtung oder Prillingeinrichtung, 0,01 bis 0,4 Gew.-% beträgt, bezogen auf den Harnstoffgehalt.

7. Verfahren gemäß Anspruch 6, **dadurch gekennzeichnet, dass** der Formaldehydgehalt im ersten Strom vor Zuführung in eine Granulierungseinrichtung oder Prillingeinrichtung weniger als oder höchstens 0,3 Gew.-%, vorzugsweise weniger als oder höchstens 0,2 Gew.-%, besonders bevorzugt weniger als oder höchstens 0,1 Gew.-% und ganz besonders bevorzugt weniger als oder höchstens 0,05 Gew.-% bezogen auf die Harnstoffmenge beträgt.

8. Verfahren nach einem der vorstehenden Ansprüche, **dadurch gekennzeichnet, dass** der Harnstoff-Gehalt der bereitgestellten harnstoffhaltigen Lösung mehr als 60 Gew.-%, vorzugsweise mehr als 95 Gew.-%, besonders bevorzugt mehr als 97 Gew.-%, ganz besonders bevorzugt mehr als 98 Gew.-%, noch weiter bevorzugt mehr als 98,5 Gew.-% beträgt.

9. Das Verfahren gemäß einem der vorstehenden Ansprüche, **dadurch gekennzeichnet, dass** die Temperatur der harnstoffhaltigen Lösung mehr als 130°C beträgt.

10. Verfahren nach einem der Ansprüche 1 bis 9, **dadurch gekennzeichnet, dass** der formaldehydhaltige Granulierungszusatzstoff Formaldehyd oder eine Formaldehyd- und Harnstoff-haltige Lösung ist oder ein wasserlösliches Additions- und/oder Kondensationsprodukt aus Formaldehyd und Harnstoff enthält, besonders bevorzugt ein Formaldehyd/Harnstoff-Präkondensat oder -Polymerisat enthält.

11. Vorrichtung zur Herstellung harnstoffhaltiger Partikel umfassend:
(a) eine Transferleitung (3) für einen ersten Strom einer harnstoffhaltigen Lösung,
(b) eine von der Transferleitung (3) abzweigende Seitenstromleitung (6), die eine vom ersten Strom abgezweigte harnstoffhaltige Lösung enthält,
(c) eine Reaktionsvorrichtung (7),
(d) eine Transportleitung (4), über die eine einen formaldehydhaltigen Granulierungszusatzstoff enthaltende Lösung zugeführt wird, die mit der Reaktionsvorrichtung (7) verbunden ist,
(e) eine Zuführleitung (8) von der Reaktionsvorrichtung (7) in die Transferleitung (3')
(f) eine Granulierungseinrichtung (9), der längs der Transferleitung (3, 3') mittels einer Pumpe (1) und/oder eines geeigneten Ventils (5') die harnstoffhaltige Lösung und über die Transportleitung (4) die einen formaldehydhaltigen Granulierungszusatzstoff enthaltende Lösung zugeführt wird,
**dadurch gekennzeichnet, dass** die Seitenstromleitung (6) vor der Reaktionsvorrichtung (7) in die Transportleitung (4) mündet und dass die von der Transferleitung abzweigende Seitenstromleitung (6) eine Steuerungsvorrichtung zum Dosieren (5) aufweist,
wobei die Steuerungsvorrichtung zum Dosieren (5) ein Ventil umfasst.

12. Vorrichtung gemäß Anspruch 11, **dadurch gekennzeichnet, dass** die Transferleitung (3), nach der Abzweigung der Seitenstromleitung (6) und vor der Einmündung der Zuführleitung (8) in die Transferleitung, (3') eine Steuerungsvorrichtung (5') zum Dosieren aufweist.

13. Vorrichtung nach einem der Ansprüche 11 oder 12, **dadurch gekennzeichnet, dass** die Reaktionsvorrichtung (7) ein Reaktionsbehälter oder ein erweitertes Rohr ist.

## Claims

1. Process for producing urea-containing particles, comprising the steps of:
(a) providing a urea-containing solution in a first stream
(b) providing a solution containing a formaldehyde-containing granulating additive
(c) branching off part of the urea-containing solution from the first stream into a side stream
(d) combining the part of the urea-containing solution from the side stream and the solution containing a formaldehyde-containing granulating additive to give a second stream
(e) adding the second stream to the first stream
(f) introducing the first stream which also contains the solution from the second stream into a granulating apparatus or prilling apparatus,
**characterized in that** the amount of the part of the urea-containing solution which originates from the first stream and is combined with a solution containing a formaldehyde-containing granulating additive to give a second stream is controlled by means of a control device for metering (5), with this amount being controlled via at least one valve.

2. Process according to Claim 1, **characterized in that** the granulating apparatus is selected from a fluidizedbed granulator or a drum granulator.

3. Process according to either of the preceding claims, **characterized in that** mixing/intermingling occurs after combining part of the urea-containing solution from the first stream and the solution containing a formaldehyde-containing granulating additive to give a second stream.

4. Process according to any of the preceding claims, **characterized in that** the second stream is conveyed through a reaction apparatus (7) before it is added to the first stream.

5. Process according to Claim 4, **characterized in that** the reaction apparatus (7) is a reaction vessel or a widened tube.

6. Process according to any of the preceding claims, **characterized in that** the formaldehyde content in the first stream of the urea-containing solution, after addition of the second stream and before introduction into a granulating apparatus or prilling apparatus, is from 0.01 to 0.4% by weight, based on the urea content.

7. Process according to Claim 6, **characterized in that** the formaldehyde content in the first stream before introduction into a granulating apparatus or prilling apparatus is less than or not more than 0.3% by weight, preferably less than or not more than 0.2% by weight, particularly preferably less than or not more than 0.1% by weight and very particularly preferably less than or not more than 0.05% by weight, based on the amount of urea.

8. Process according to any of the preceding claims, **characterized in that** the urea content of the urea-containing solution provided is more than 60% by weight, preferably more than 95% by weight, particularly preferably more than 97% by weight, very particularly preferably more than 98% by weight, even more preferably more than 98.5% by weight.

9. Process according to any of the preceding claims, **characterized in that** the temperature of the urea-containing solution is more than 130°C.

10. Process according to any of Claims 1 to 9, **characterized in that** the formaldehyde-containing granulating additive is formaldehyde or a formaldehyde- and urea-containing solution or contains a water-soluble addition product and/or condensation product of formaldehyde and urea, particularly preferably contains a formaldehyde-urea precondensate or formaldehyde-urea polymer.

11. Apparatus for producing urea-containing particles, comprising:
(a) a transfer conduit (3) for a first stream of a urea-containing solution,
(b) a side stream conduit (6) which branches off from the transfer conduit (3) and contains a urea-containing solution which has been branched off from the first stream,
(c) a reaction apparatus (7),
(d) a transport conduit (4) via which a solution containing a formaldehyde-containing granulating additive is supplied and which is connected to the reaction apparatus (7),
(e) a feed conduit (8) from the reaction apparatus (7) into the transfer conduit (3')
(f) a granulating apparatus (9) to which the urea-containing solution is supplied along the transfer conduit (3, 3') by means of a pump (1) and/or a suitable valve (5') and the solution containing a formaldehyde-containing granulating additive is supplied via the transport conduit (4),
**characterized in that** the side stream conduit (6) opens into the transport conduit (4) upstream of the reaction apparatus (7) and **in that** the side stream conduit (6) which branches off from the transfer conduit has a control device for metering (5), with the control device for metering (5) comprising a valve.

12. Apparatus according to Claim 11, **characterized in that** the transfer conduit (3) has a control device (5') for metering downstream of the branching-off of the side stream conduit (6) and upstream of the point of entry of the feed conduit (8) into the transfer conduit (3').

13. Apparatus according to either Claim 11 or 12, **characterized in that** the reaction apparatus (7) is a reaction vessel or a widened tube.

## Revendications

1. Procédé pour la préparation de particules contenant de l'urée, comprenant les étapes de :
(a) mise à disposition d'une solution contenant de l'urée dans un premier flux
(b) mise à disposition d'une solution contenant un additif de granulation contenant du formaldéhyde
(c) dérivation d'une partie de la solution contenant de l'urée du premier flux en un flux latéral
(d) réunion de la partie de la solution contenant de l'urée du flux latéral et de la solution contenant un additif de granulation contenant du formaldéhyde dans un deuxième flux
(e) alimentation du deuxième flux au premier flux
(f) alimentation du premier flux, contenant également la solution du deuxième flux, dans une installation de granulation ou une installation de grelonage,
**caractérisé en ce que** la quantité de la partie de la solution contenant de l'urée qui provient du premier flux et qui est réunie avec une solution contenant un additif de granulation contenant du formaldéhyde dans un deuxième flux, est contrôlée par l'intermédiaire d'un dispositif de contrôle pour ajout (5), cette quantité étant contrôlée par l'intermédiaire d'au moins une soupape.

2. Procédé selon la revendication 1, **caractérisé en ce que** l'installation de granulation est choisie parmi un granulateur à lit fluidisé et un granulateur à tambour.

3. Procédé selon l'une quelconque des revendications précédentes, **caractérisé en ce qu'**un mélange/brassage est réalisé après la réunion d'une partie de la solution contenant de l'urée du premier flux et de la solution contenant un additif de granulation contenant du formaldéhyde dans un deuxième flux.

4. Procédé selon l'une quelconque des revendications précédentes, **caractérisé en ce que** le deuxième flux est conduit par un dispositif de réaction (7), avant qu'il ne soit alimenté au premier flux.

5. Procédé selon la revendication 4, **caractérisé en ce que** le dispositif de réaction (7) est une cuve de réaction ou un tube élargi.

6. Procédé selon l'une quelconque des revendications précédentes, **caractérisé en ce que** la teneur en formaldéhyde dans le premier flux de la solution contenant de l'urée, après l'alimentation du deuxième flux, avant l'alimentation dans une installation de granulation ou une installation de grelonage, est de 0,01 à 0,4 % en poids, par rapport à la teneur en urée.

7. Procédé selon la revendication 6, **caractérisé en ce que** la teneur en formaldéhyde dans le premier flux avant l'alimentation dans une installation de granulation ou une installation de grelonage est inférieure à, ou d'au plus, 0,3 % en poids, de préférence inférieure à, ou d'au plus, 0,2 % en poids, particulièrement préférablement inférieure à, ou d'au plus, 0,1 % en poids et tout particulièrement préférablement inférieure à, ou d'au plus, 0,05 % en poids par rapport à la quantité d'urée.

8. Procédé selon l'une quelconque des revendications précédentes, **caractérisé en ce que** la teneur en urée de la solution contenant de l'urée mise à disposition est supérieure à 60 % en poids, de préférence supérieure à 95 % en poids, particulièrement préférablement supérieure à 97 % en poids, tout particulièrement préférablement supérieure à 98 % en poids, encore plus préférablement supérieure à 98,5 % en poids.

9. Procédé selon l'une quelconque des revendications précédentes, **caractérisé en ce que** la température de la solution contenant de l'urée est supérieure à 130 °C.

10. Procédé selon l'une quelconque des revendications 1 à 9, **caractérisé en ce que** l'additif de granulation contenant du formaldéhyde est du formaldéhyde ou une solution contenant du formaldéhyde et de l'urée ou contient un produit, soluble dans l'eau, de condensation et/ou d'addition de formaldéhyde et d'urée, particulièrement préférablement contient un précondensat ou un polymérisat de formaldéhyde/urée.

11. Dispositif pour la préparation de particules contenant de l'urée comprenant :
(a) une conduite de transfert (3) pour un premier flux d'une solution contenant de l'urée,
(b) une conduite de flux latéral (6) dérivant de la conduite de transfert (3), qui contient une solution contenant de l'urée dérivée du premier flux,
(c) un dispositif de réaction (7),
(d) une conduite de transport (4), par laquelle une solution contenant un additif de granulation contenant du formaldéhyde est alimentée, qui est reliée au dispositif de réaction (7),
(e) une conduite d'alimentation (8) du dispositif de réaction (7) dans la conduite de transfert (3')
(f) une installation de granulation (9), à laquelle, le long de la conduite de transfert (3, 3'), au moyen d'une pompe (1) et/ou d'une soupape appropriée (5') la solution contenant de l'urée et, par la conduite de transport (4), la solution contenant un additif de granulation contenant du formaldéhyde sont alimentées,
**caractérisé en ce que** la conduite de flux latéral (6) débouche, avant le dispositif de réaction (7), dans la conduite de transport (4) et **en ce que** la conduite de flux latéral (6) dérivant de la conduite de transfert présente un dispositif de contrôle pour ajout (5), le dispositif de contrôle pour ajout (5) comprenant une soupape.

12. Dispositif selon la revendication 11, **caractérisé en ce que** la conduite de transfert (3), après la déviation de la conduite de flux latéral (6) et avant la bouche d'entrée de la conduite d'alimentation (8) dans la conduite de transfert (3') présente un dispositif de contrôle (5') pour ajout.

13. Dispositif selon l'une quelconque des revendications 11 et 12, **caractérisé en ce que** le dispositif de réaction (7) est une cuve de réaction ou un tube élargi.
